# EUROPÄISCHE PATENTSCHRIFT

(11) **EP 0 990 375 B1**
(45) Veröffentlichungstag und Bekanntmachung des Hinweises auf die Patenterteilung: **02.02.2005**
(21) Anmeldenummer: 99927710.6
(22) Anmeldetag: 16.04.1999
(51) Int. Cl.: H05K 5/02

(54) **SCHRANK MIT MINDESTENS EINEM EINGEBAUTEN ELEKTRISCHEN GERÄT**
CABINET WITH AT LEAST ONE BUILT-IN ELECTRICAL APPARATUS
ARMOIRE COMPORTANT AU MOINS UN APPAREIL ELECTRIQUE ENCASTRE

(30) Priorität: 17.04.1998 DE 19817945
(43) Veröffentlichungstag der Anmeldung: 05.04.2000
(73) Patentinhaber: SIEMENS AKTIENGESELLSCHAFT, 80333 München (DE)
(72) Erfinder: JAKOB, Jürgen, D-13507 Berlin (DE); SCHÜPPLER, Thomas, D-13089 Berlin (DE)
(86) Internationale Anmeldenummer: PCT/DE1999/001213
(87) Internationale Veröffentlichungsnummer: WO 1999/055126

(56) Entgegenhaltungen:
- DE-A1- 3 330 587
- SE-C2- 510 018

## Beschreibung

Die Erfindung bezieht sich auf einen Schrank mit mindestens einem eingebauten elektrischen Gerät, das eine Vorderfront mit einer Frontplatte mit Anzeige- und Bedienelementen und Verbindungsleitungen von diesen Elementen in das Innere des elektrischen Gerätes sowie eine Rückseite mit Einrichtungen zum Befestigen elektrischer Anschlußleitungen aufweist.

Ein Schrank dieser Art ist in dem Katalog R1.1979 "Elektronische Schutzeinrichtungen" der Siemens AG auf den Seiten 2 bis 4 dargestellt und beschrieben. In den bekannten Schrank ist mindestens ein sogenannter Baugruppenträger als elektrisches Gerät eingebaut, wobei zum Einbau in den Schrank der mindestens eine Baugruppenträger auf Lochleisten des Schrankes verschraubt ist. Der Baugruppenträger als elektrisches Gerät weist an seiner Vorderfront eine oder mehrere Frontplatten auf, die Anzeige- und Bedienelemente tragen. Diese Anzeige- und Bedienelemente sind in üblicher Weise über elektrische Verbindungsleitungen mit dem Innern des elektrischen Gerätes verbunden. An der Rückseite des elektrischen Gerätes des bekannten Schrankes sind Einrichtungen zum Befestigen elektrischer Anschlußleitungen vorhanden. Dabei dienen die Einrichtungen zum Befestigen der elektrischen Anschlußleitungen einerseits dazu, die einzelnen Komponenten des elektrischen Gerätes untereinander zu verbinden und andererseits dazu, Anschlußleitungen nach außen hin aufzunehmen. Der bekannte Schrank weist nicht nur an seiner Vorderseite eine Schranktür auf, sondern auch an seiner Rückseite. Die Schranktür an der Rückseite ermöglicht einen einfachen Zugriff zu den Einrichtungen zum Befestigen der elektrischen Anschlußleitungen. Ist der bekannte Schrank für einen Einsatzfall vorgesehen, bei dem er direkt vor einer Wand aufgestellt werden soll, dann werden die Baugruppenträger nicht direkt mit dem Schrank verschraubt, sondern auf einen Schwenkrahmen aufgeschraubt, der ein Herausschwenken des elektrischen Gerätes aus dem Schrank ermöglicht. Nach dem Herausschwenken ist die Verdrahtung des elektrischen Gerätes auf seiner Rückseite gut zugänglich.

Der Erfindung liegt die Aufgabe zugrunde, einen Schrank mit mindestens einem eingebauten elektrischen Gerät so fortzuentwickeln, daß eine leichte Zugänglichkeit des elektrischen Gerätes bezüglich seiner Rückseite auf konstruktiv einfache Weise ermöglicht ist.

Zur Lösung dieser Aufgabe ist bei einem Schrank der eingangs angegebenen Art erfindungsgemäß die Frontplatte des elektrischen Gerätes abnehmbar gehalten, und es ist das elektrische Gerät mit abgenommener Frontplatte und mit der Rückseite nach vorne im Schrank angebracht; die Frontplatte ist neben dem elektrischen Gerät am Schrank gehalten, und die entsprechend lang bemessenen Verbindungsleitungen sind durch die Vorderfront in das Innere des elektrischen Gerätes geführt.

Ein wesentlicher Vorteil des erfindungsgemäßen Schrankes besteht darin, daß durch die Verwendung eines elektrischen Gerätes mit einer abnehmbar gehaltenen Frontplatte und entsprechend lang bemessenen Verbindungsleitungen von der Frontplatte in das Geräteinnere und durch eine Anbringung des elektrischen Gerätes mit der Rückseite nach vorne eine optimale Zugänglichkeit zu den Einrichtungen zum Befestigen der elektrischen Anschlußleitungen gegeben ist, ohne daß ein Schwenkrahmen oder andere aufwendige konstruktive Lösungen benutzt werden. Dabei läßt sich ohne weiteres bei entsprechender Anordnung der abgenommenen Frontplatte erreichen, daß sowohl diese als auch die Einrichtung zum Befestigen elektrischer Anschlußleitungen dem Bedienungspersonal gleichzeitig gut zugänglich sind.

Bei dem erfindungsgemäßen Schrank kann die Frontplatte des elektrischen Gerätes in unterschiedlicher Weise angebracht sein; beispielsweise ist es denkbar, daß die Frontplatte an einer Seitenwand des Schrankes angehängt oder eingeschnappt ist.

Als vorteilhaft wird es angesehen, wenn die Frontplatte an einer vorderseitigen Tür des Schrankes gehalten ist bzw. in die vorderseitige Tür integriert ist.

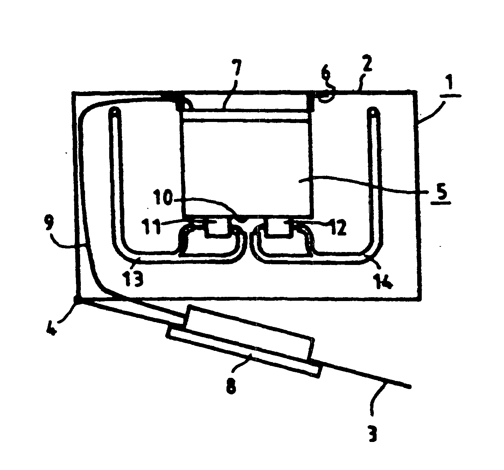

Zur weiteren Erläuterung der Erfindung ist in der Figur 1 eine Draufsicht auf ein Ausführungsbeispiel eines schematisch dargestellten Schrankes gemäß der Erfindung wiedergegeben.

Die Figur zeigt einen Schrank 1, der eine Rückwand 2 und eine vorderseitige Tür 3 aufweist, die um eine Lagerstelle 4 schwenkbar ist.

An der Rückwand 2 des Schrankes 1 ist ein elektrisches Gerät 5 mit Winkeln 6 in der Weise angebracht, daß seine Vorderfront 7 der Rückwand 2 zugewandt ist. Vor der Anbringung des elektrischen Gerätes 5 an der Rückwand 2 des Schrankes 1 ist eine Frontplatte 8 des elektrischen Gerätes 1 von der Vorderfront 7 abgenommen worden. Dabei ist bei der Montage des Gerätes 5 im Schrank 1 dafür gesorgt, daß Verbindungsleitungen 9 zwischen der Frontplatte 8 und dem Innern des Gerätes 5 seitlich an dem elektrischen Gerät 5 vorbeigeführt sind.

Infolge der Anbringung des Gerätes 5 mit seiner Frontseite 7 der Rückwand 2 des Schrankes 1 zugewandt weist eine Rückseite 10 des elektrischen Gerätes 5 zur Schranktür 3 hin. Einrichtungen 11 und 12 zum Befestigen elektrischer Anschlußleitungen 13 und 14 liegen damit ebenfalls der Schranktür 3 zugewandt im Schrank 1, so daß diese Einrichtungen 11 und 12 nach Öffnen der Schranktür 3 frei zugänglich sind. Es kann damit nach Öffnen der Schranktür 3 gut an den Einrichtungen 11 und 12 gearbeitet werden.

## Patentansprüche

1. Schrank mit mindestens einem eingebauten elektrischen Gerät, das eine Vorderfront mit einer Frontplatte mit Anzeigeund Bedienelementen und Verbindungsleitungen von diesen Elementen in das Innere des elektrischen Gerätes sowie eine Rückseite mit Einrichtungen (11,12) zum Befestigen elektrischer Anschlußleitüngen (13,14) aufweist,
**dadurch gekennzeichnet, daß**
- die Frontplatte (8) des elektrischen Gerätes (5) abnehmbar gehalten ist,
- das elektrische Gerät (5) mit abgenommener Frontplatte (8) und mit der Rückseite (10) nach vorne im Schrank (1) angebracht ist und
- die Frontplatte (8) neben dem elektrischen Gerät (5) am Schrank (1) gehalten ist und die entsprechend lang bemessenen Verbindungsleitungen (9) durch die Vorderfront (7) in das Innere des elektrischen Gerätes (5) geführt sind.

2. Schrank nach Anspruch 1,
**dadurch gekennzeichnet, daß**
- die Frontplatte (8) an einer vorderseitigen Tür (3) des Schrankes (1) gehalten ist.

## Claims

1. Cabinet having at least one built-in electrical appliance which has a front, having a front plate with display and control elements and connection lines from these elements into the interior of the electrical appliance, and a back having devices (11, 12) for attaching electrical connection lines (13, 14), **characterized in that**
- the front plate (8) of the electrical appliance (5) is held removably,
- the electrical appliance (5) is mounted in the cabinet (1) with the front plate (8) removed and with the back (10) to the fore, and
- the front plate (8) is held on the cabinet (1) next to the electrical appliance (5), and the connection lines (9), which are of appropriate length, are routed through the front (7) into the interior of the electrical appliance (5).

2. Cabinet according to Claim 1, **characterized in that**
- the front plate (8) is held on a front door (3) of the cabinet (1).

## Revendications

1. Armoire équipée d'au moins un appareil électrique intégré composé d'une face avant munie d'une plaque frontale comportant des éléments d'affichage et de commande et des câbles de liaison qui partent de ces éléments et qui vont à l'intérieur de l'appareil électrique ainsi que d'un côté arrière muni d'installations (11, 12) pour fixer des câbles de raccordement électriques (13, 14),
**caractérisée en ce que**
- la plaque frontale (8) de l'appareil électrique (5) est maintenue de façon amovible,
- l'appareil électrique (5) est introduit dans l'armoire (1), la plaque frontale (8) étant retirée et le côté arrière (10) dirigé vers l'avant et
- la plaque frontale (8) est maintenue sur l'armoire (1) à côté de l'appareil électrique (5) et les câbles de liaison (9) dont la longueur est prévue en conséquence sont guidés vers l'intérieur de l'appareil électrique (5) à travers la face avant (7).

2. Armoire selon la revendication 1, **caractérisée en ce que**
- la plaque frontale (8) est maintenue sur une porte avant (3) de l'armoire (1).
